# EUROPÄISCHE PATENTSCHRIFT

(11) **EP 4 019 821 B1**
(45) Veröffentlichungstag und Bekanntmachung des Hinweises auf die Patenterteilung: **19.04.2023**
(21) Anmeldenummer: 20216821.7
(22) Anmeldetag: 23.12.2020
(51) Int. Cl.: F16L 19/028, F16L 19/02, F16J 15/10

(54) **ROHRVERBINDUNG**
TUBE CONNECTION
RACCORD DE TUYAU

(43) Veröffentlichungstag der Anmeldung: 29.06.2022
(73) Patentinhaber: WALTER STAUFFENBERG GMBH & CO. KG, 58791 Werdohl (DE)
(72) Erfinder: Aul, Alexander, 59423 Unna (DE); Civelek, Necip, 58791 Werdohl (DE); König, Ulrich, 58849 Herscheid (DE)
(74) Vertreter: Patentanwälte Dörner & Kötter PartG mbB

(56) Entgegenhaltungen:
- EP-A1- 3 663 624
- WO-A-91/07617
- DE-A1- 19 511 063
- DE-A1-102018 205 899
- DE-B3-102005 026 580

## Beschreibung

Die Erfindung betrifft eine Rohrverbindung nach dem Oberbegriff des Patentanspruchs 1.

Zur Realisierung von Rohrverschraubungen sind Rohrverbindungen bekannt, die einen Verbindungskörper umfassen, der das zu verbindende Rohrende aufnimmt und auf den eine Mutter aufschraubbar ist. Der Verbindungskörper weist eine zylindrische Bohrung zur Aufnahme des Rohrendes auf, wobei das Rohrende mit einer nach außen auskragenden Ausformung versehen ist, deren erste Spannfläche an der Stirnfläche des Verbindungskörpers anliegt. Eine zweite Spannfläche der Ausformung ist kegelförmig ausgebildet und liegt an einer Kegelbohrung der Mutter an. Durch Anziehen der Schraubverbindung zwischen Mutter und Verbindungskörper kann die auskragende Ausformung gegen die Stirnfläche des Verbindungskörpers gepresst werden. Zur Abdichtung des Verbindungskörpers gegenüber den von diesem aufgenommenen Rohr ist der Verbindungskörper mit einer sich bis zu der Stirnfläche des Verbindungskörpers erstreckenden, in Richtung zur Stirnfläche sich erweiternden Kegelbohrung versehen, wodurch zwischen Verbindungskörper und Rohr eine Aufnahme für einen Dichtring gebildet ist. Der Dichtring weist entsprechend der ausgebildeten Aufnahme einen im Wesentlichen dreieckförmigen Querschnitt auf. Eine derartige Rohrverbindung ist beispielsweise aus der DE 195 26 316 A1 bekannt.

Bei Rohrverbindungen der vorgenannten Art kann es je nach Ausbildung des Dichtrings dazu kommen, dass der Dichtring im Zuge der Montage verdreht oder sogar komplett umgestülpt wird, wodurch die Dichtwirkung sowie auch die Haltbarkeit des Dichtrings beeinträchtigt werden kann.

Hier will die Erfindung Abhilfe schaffen. Der Erfindung liegt die Aufgabe zugrunde, eine Rohrverbindung der vorgenannten Art bereitzustellen, die aufwandminimiert herzustellen ist und bei der ein Verdrehen oder Umstülpen des Dichtrings vermieden ist. Gemäß der Erfindung wird diese Aufgabe durch die Merkmale des kennzeichnenden Teils des Patentanspruchs 1 gelöst.

Mit der Erfindung ist eine Rohrverbindung der vorgenannten Art geschaffen, die aufwandminimiert herstellbar ist und bei der ein Verdrehen oder Umstülpen des Dichtrings vermieden ist. Dadurch, dass der Dichtring einen polygonalen, symmetrischen Querschnitt aufweist, ist gewährleistet, dass eine auf einer Seite aufgebrachte Kraft eine entsprechende gegenüberliegende Kraft erzeugt, wodurch eine symmetrische Druckverteilung in dem Dichtring erzielt ist. Es hat sich gezeigt, dass ein polygonaler Dichtring mit einer symmetrischen Druckverteilung signifikant weniger zum Verdrehen oder Umstülpen neigt. Darüber hinaus erfüllt der Dichtring auch "umgestülpt" seine Funktion.

In Weiterbildung der Erfindung weist der Dichtring einen fünfeckigen oder sechseckigen Querschnitt auf. Hierdurch sind Anlageseiten zum Abdichten der Dichtflächen einer Rohrverbindung gebildet, die über Scheitellinien verbunden sind, welche die Bildung von gerichteten Rückstellkräften ermöglichen. Alternativ kann der Querschnitt des Dichtrings auch mehr als sechs Ecken aufweisen. Dabei ist vorliegend unter dem Begriff "Ecke" bzw. "eckig" vorliegend auch ein Radius zu subsummieren, der zwei winklig zueinander angestellte Flächen miteinander verbindet.

Unter einer "Scheitellinie" wird vorliegend eine lineare, durch die winklige Anstellung zweier Ebenen erzeugte Außenecke (entspricht dem Dachfirst eines Satteldaches) verstanden.

Die erste Spannfläche des Rohres geht in eine Verbindungsfläche über, die konisch in Richtung des zylindrischen Endabschnitts des Rohres zuläuft. Hierdurch ist ein winkliger Übergang zur Aufnahme einer Scheitellinie des Dichtrings gebildet, wodurch eine stabile Positionierung des Dichtrings ermöglicht ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Rohrverbindung;
- Figur 2: die vergrößerte Detaildarstellung des Ausschnitts II aus Figur 1;
- Figur 3: die schematische Darstellung des Dichtrings der Rohrverbindung aus Figur 1 und
- Figur 4: die vergrößerte Detaildarstellung des Ausschnitts IV des Dichtrings aus Figur 3.

Die als Ausführungsbeispiel gewählte Rohrverbindung 1 besteht im Wesentlichen aus einem Verbindungskörper 2, der ein Rohr 4 aufnimmt und auf den eine Mutter 3 aufgeschraubt ist, wobei zwischen Rohr 4 und Verbindungskörper 2 ein Dichtring 5 angeordnet ist.

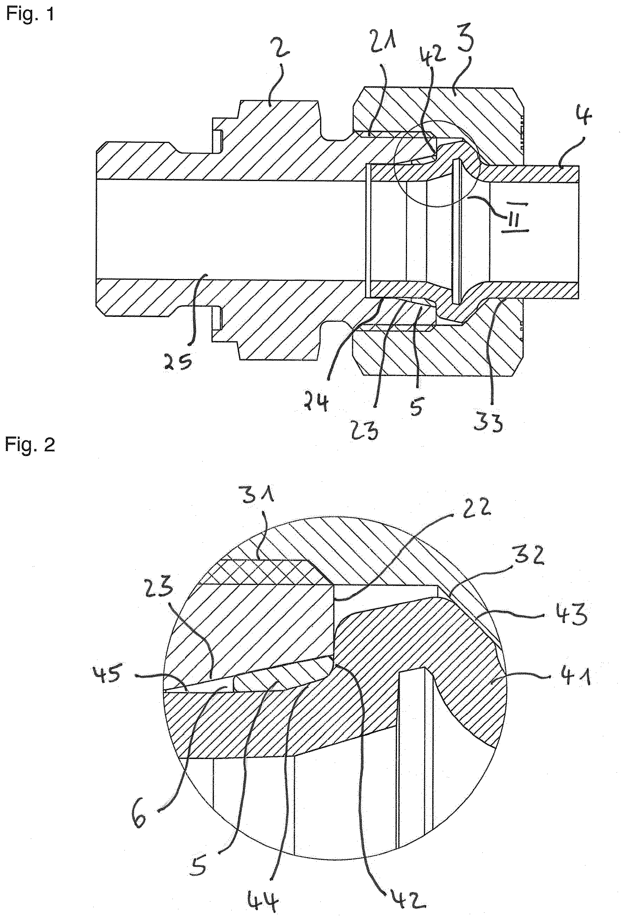

Der Verbindungskörper 2 ist in Figur 1 teilweise, und zwar in Hinsicht auf den Anschluss des Endabschnitts des Rohres 4 dargestellt. Das weitere Ende kann entsprechend dieser Darstellung nochmals vorgesehen sein, so dass der Verbindungskörper 2 dem Anschluss zweier Rohre dient. Alternativ kann dieser auch an seinem nicht gezeigten Ende mit einem Gewinde zum Anschluss an oder in ein Gewindestück versehen sein. Außen umlaufend ist an dem Verbindungskörper 2 ein Außengewinde 21 zum Aufschrauben der Mutter 3 angeordnet, das sich bis zu dessen Stirnfläche 22 erstreckt. Entlang seiner Mittelachse weist der Verbindungskörper 2 eine Durchgangsbohrung 25 auf, die in eine durchmessererweiterte zylindrische Bohrung 24 mündet, an die sich eine Kegelbohrung 23 anschließt, die in Richtung der Stirnfläche 22 sich erweiternd ausgebildet ist.

Auf das Außengewinde 21 des Verbindungskörpers 2 ist die Mutter 3 aufgeschraubt, die hierzu mit einem Innengewinde 31 versehen ist. Die Mutter 3 weist eine Kegelbohrung 32 auf, die in Richtung des Verbindungskörpers 2 sich erweiternd ausgebildet ist. An die Kegelbohrung 32 der Mutter 3 schließt sich eine Durchgangsbohrung 33 an, durch welche das Rohr 4 hindurchgeführt ist.

In den endseitigen Abschnitt des Rohres 4, dessen Außendurchmesser im Wesentlichen dem Innendurchmesser der zylindrischen Bohrung 24 des Verbindungskörpers 2 entspricht, ist eine Ausformung 41 eingeformt. Die Ausformung 41 weist eine erste Spannfläche 42 auf, die im Wesentlichen orthogonal zur Rotationsmittelachse des Rohres 4 angestellt ist und die an der Stirnfläche 22 des Verbindungskörpers 2 anliegt. Die erste Spannfläche 42 geht in eine Verbindungsfläche 44 über, die in Richtung des zylindrischen Endabschnitts 45 konisch zuläuft.

Die zweite, der ersten Spannfläche 42 gegenüberliegende Spannfläche 43 ist kegelförmig ausgebildet, wobei der Verlauf dieser zweiten Spannfläche 43 im Wesentlichen der Kegelbohrung 32 der Mutter 3 entspricht, an der die Ausformung 41 mit der zweiten Spannfläche 43 anliegt.

Durch die Kegelbohrung 23 des Verbindungskörpers 2 und den endseitigen Abschnitt des Rohres 4 mit dessen erster Spannfläche 4 und dessen Verbindungsfläche 45 ist ein ringförmiger Aufnahmeraum 6 mit im Wesentlichen viereckförmigen Querschnitt zur Aufnahme des Dichtrings 5 begrenzt, der auf das Rohr 4 aufgeschoben ist.

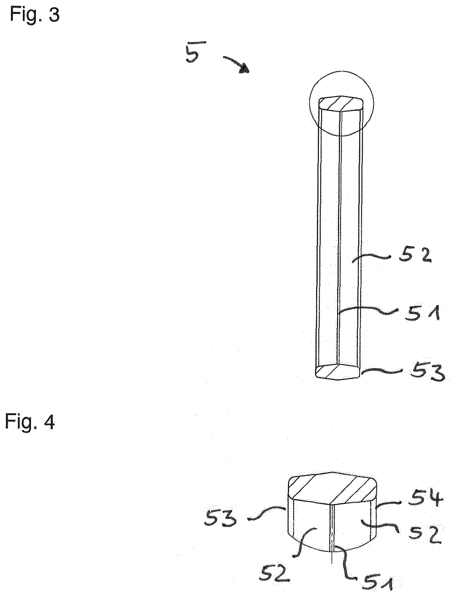

Der Dichtring 5 ist in den Figuren 3 und 4 vergrößert dargestellt. Er weist einen im Wesentlichen sechseckförmigen Querschnitt auf, der aus zwei parallel zueinander angeordneten, satteldachartig nach außen abgewinkelten Grundseiten gebildet ist, die über zwei kürzere Außenseiten miteinander verbunden sind. Hierdurch weist der Dichtring 5 vier jeweils von einer Scheitellinie 51 konisch nach außen zulaufende breite Dichtflächen 52 auf, die in einer von zwei parallel zueinander angeordneten geraden, schmalen Dichtflächen 53 münden. Die "Ecken" des sechseckförmigen Querschnitts sind über einen Radius 54 abgerundet ausgebildet. Im Ausführungsbeispiel ist der Dichtring aus Gummi hergestellt. Er kann darüber hinaus auch aus einem sonstigen Elastomerwerkstoff hergestellt sein.

Wie insbesondere aus Figur 2 ersichtlich, liegt der Dichtring 5 mit einer schmalen Dichtfläche 53 an der ersten Spannfläche 42 der Ausformung 41 des Rohres 4 an und verläuft mit einer breiten Dichtfläche 52 seiner Innenkontur entlang der Verbindungsfläche 44. Die zweite breite Dichtfläche 52 der Innenkontur des Dichtrings 5 liegt an dem zylindrischen Endabschnitt 45 an, wobei die zwischen diesen beiden inneren breiten Dichtflächen 52 gebildete Scheitellinie 51 in dem winkligen Übergang zwischen Verbindungsfläche 44 und zylindrischem Abschnitt 45 anliegt. Die beiden äußeren breiten Dichtflächen 52 des Dichtrings 5 sind derart an die Innenwandung der Kegelbohrung 23 gepresst, dass sie eine gemeinsame ebene Fläche ausbilden. Durch die hierdurch gebildeten Rückstellkräfte wird der Dichtring sowohl gegen den Übergang zwischen Verbindungsfläche 44 und zylindrischem Abschnitt 45, als auch gegen den Dichtspalt zwischen der Stirnfläche 22 des Verbindungskörpers 2 und der ersten Spannfläche 42 des Rohres 4 gepresst. Eine Extrusion in den Spalt sowie auch eine Verwindung des Dichtrings 5 ist durch diese Gestaltung zuverlässig verhindert. Im Ausführungsbeispiel ist der Querschnitt des Dichtrings 5 als symmetrischer Sechskant ausgebildet. Je nach Ausbildung des Dichtspaltes kann der Querschnitt auch eine andere symmetrische Polygonform aufweisen.

## Patentansprüche

1. Rohrverbindung (1) mit einem Verbindungskörper (2), einer auf diesen auf- oder einschraubbaren Mutter (3), die eine in Richtung des Verbindungskörpers (2) sich erweiternde Kegelbohrung (32) aufweist, und einem Rohr (4), das durch eine Bohrung (33) der Mutter hindurchgeführt ist und das eine nach außen auskragende Ausformung (41) mit zwei Spannflächen (42, 43) aufweist, von denen eine erste Spannfläche (42) parallel zur Stirnfläche (22) des Verbindungskörpers (2) ist und im verspannten Zustand der Rohrverbindung (1) zumindest bereichsweise an dem Verbindungsköper (2) abgestützt ist und die zweite Spannfläche (43) entsprechend der Kegelbohrung (32) der Mutter (3) kegelförmig ausgebildet ist und in der Kegelbohrung (32) der Mutter (3) abgestützt ist, wobei der Verbindungskörper (2) eine radial umlaufende Ausnehmung aufweist, durch die ein Aufnahmeraum (6) für einen Dichtring (5) gebildet ist, der durch die erste Spannfläche (42) begrenzt ist, **dadurch gekennzeichnet, dass** die erste Spannfläche (42) des Rohres (4) in eine Verbindungsfläche (44) übergeht, die konisch in Richtung des zylindrischen Endabschnitts (45) des Rohres (4) zuläuft und dass der Dichtring (5) einen polygonalen, symmetrischen Querschnitt aufweist.

2. Rohrverbindung nach Anspruch 1, **dadurch gekennzeichnet, dass** die Ausnehmung durch eine sich bis zu der Stirnfläche (22) des Verbindungskörpers (2) erstreckende, in Richtung zur Stirnfläche (22) sich erweiternde Kegelbohrung (23) gebildet ist, die an ihrem kleinsten Durchmesser in einer zylindrischen Bohrung (24) des Verbindungskörpers (2) mündet, deren Innendurchmesser bevorzugt im Wesentlichen dem Außendurchmesser des von dem Verbindungsstück (2) aufgenommenen Endabschnitts des Rohres (4) entspricht.

3. Rohrverbindung nach einem der vorgenannten Ansprüche, **dadurch gekennzeichnet, dass** der Querschnitt des Dichtrings (5) fünfeckig oder sechseckig ausgebildet ist

4. Rohrverbindung nach Anspruch 3, **dadurch gekennzeichnet, dass** der Querschnitt des Dichtrings (5) sechseckig ausgebildet ist, wobei der Querschnitt aus zwei parallel zueinander, satteldachartig nach außen abgewinkelten Grundseiten gebildet ist, die über zwei gegenüber den Grundseiten kürzere Außenseiten miteinander verbunden sind.

5. Rohrverbindung nach Anspruch 4, **dadurch gekennzeichnet, dass** die Ecken des Querschnitts des Dichtrings (5) über einen Radius (54) abgerundet ausgebildet sind.

## Claims

1. Tube connection (1) with a connecting body (2), a nut (3) which can be screwed onto or into the connecting body, which has a conical bore (32) widening in the direction of the connecting body (2), and a tube (4), which is guided through a bore (33) of the nut and which has an outwardly projecting formation (41) with two clamping surfaces (42, 43), of which a first clamping surface (42) is parallel to the end face (22) of the connecting body (2) and, in the clamped state of the tube connection (1), is supported at least in regions on the connecting body (2), and the second clamping surface (43) is of conical design corresponding to the conical bore (32) of the nut (3) and is supported in the conical bore (32) of the nut (3), wherein the connecting body (2) has a radially circumferential recess, through which a receiving space (6) for a sealing ring (5) is formed, which is delimited by the first clamping surface (42), **characterised in that** the first clamping surface (42) of the tube (4) merges into a connecting surface (44), which tapers conically in the direction of the cylindrical end section (45) of the tube (4), and **in that** the sealing ring (5) has a polygonal, symmetrical cross-section.

2. Tube connection according to claim 1, **characterised in that** the recess is formed by a conical bore (23) extending up to the end face (22) of the connecting body (2) and widening in the direction of the end face (22), which conical bore, at its smallest diameter, opens into a cylindrical bore (24) of the connecting body (2), the inner diameter of which preferably corresponds substantially to the outer diameter of the end section of the tube (4) received by the connecting piece (2).

3. Tube connection according to one of the previous claims, **characterised in that** the cross-section of the sealing ring (5) is pentagonal or hexagonal.

4. Tube connection according to claim 3, **characterised in that** the cross-section of the sealing ring (5) is hexagonal, wherein the cross-section is formed by two base sides, which are parallel to one another and angled outwards in the manner of a saddle roof, which base sides are connected to one another via two outer sides, which are shorter than the base sides.

5. Tube connection according to claim 4, **characterised in that** the corners of the cross-section of the sealing ring (5) are rounded over a radius (54).

## Revendications

1. Raccord (1) de tuyauterie comprenant un corps de jonction (2), un écrou (3) vissable sur ou dans ce corps, écrou qui présente un alésage conique (32) allant en s'élargissant en direction du corps de jonction (2), et un tuyau (4) traversant un alésage (33) de l'écrou et qui présente, en porte-à-faux en direction de l'extérieur, une géométrie (41) disposant de deux surfaces de serrage (42, 43), surfaces de serrage dont une première surface de serrage (42) est parallèle à la surface frontale (22) du corps de jonction (2) et qui, lorsque le raccord de tuyauterie (1) est serré, prend appui au moins localement contre le corps de jonction (2), et dont la deuxième surface de serrage (43) est configurée conique de façon correspondante à l'alésage conique (32) de l'écrou (3), et prend appui dans l'alésage conique (32) de l'écrou (3), sachant que le corps de jonction (2) présente un évidement radialement périphérique à travers lequel est formé un volume (6) recevant une bague d'étanchéité (5), volume qui est limité par la première surface de serrage (42), **caractérisé en ce que** la première surface de serrage (42) du tuyau (4) devient une surface de jonction (44) allant selon une géométrie conique en direction du segment terminal (45) cylindrique du tuyau (4), et que la bague d'étanchéité (5) présente une section polygonale symétrique.

2. Raccord (1) de tuyauterie selon la revendication 1, **caractérisé en ce que** l'évidement est formé par un alésage conique (23) s'étendant jusqu'à la surface frontale (22) du corps de jonction (2) et allant en s'élargissant en direction de la surface frontale (22), alésage qui au niveau de son plus petit diamètre aboutit dans un alésage cylindrique (24) du corps de jonction (2), alésage dont le diamètre intérieur correspond préférentiellement et pour l'essentiel au diamètre extérieur du segment terminal - reçu par la pièce de jonction (2) - du tuyau (4).

3. Raccord (1) de tuyauterie selon l'une des revendications précédentes, **caractérisé en ce que** la section de la bague d'étanchéité (5) est configurée pentagonale ou hexagonale.

4. Raccord (3) de tuyauterie selon la revendication 3, **caractérisé en ce que** la section de la bague d'étanchéité (5) est configurée hexagonale, sachant que la section est formée par deux côtés de base parallèles et coudés vers l'extérieur à la manière d'un toit à deux versants, qui sont reliés ensemble par deux côtés extérieurs plus courts que les côtés de base.

5. Raccord (4) de tuyauterie selon la revendication 4, **caractérisé en ce que** les angles de la section de la bague d'étanchéité (5) sont configurés arrondis selon un rayon (54).
